# EUROPEAN PATENT SPECIFICATION

(11) **EP 3 162 104 B1**
(45) Date of publication and mention of the grant of the patent: **02.11.2022**
(21) Application number: 15777729.3
(22) Date of filing: 22.06.2015
(51) Int. Cl.: H04W 12/06, H04W 12/12, H04M 3/436, H04M 3/42, H04M 3/22

(54) **A METHOD TO AUTHENTICATE CALLS IN A TELECOMMUNICATION SYSTEM**
VERFAHREN ZUR AUTHENTIFIZIERUNG VON ANRUFEN IN EINEM TELEKOMMUNIKATIONSSYSTEM
PROCÉDÉ D'AUTHENTIFICATION D'APPELS DANS UN SYSTÈME DE TÉLÉCOMMUNICATIONS

(30) Priority: 25.06.2014 US 201462016996 P
(43) Date of publication of application: 03.05.2017
(73) Proprietor: Orange, 92130 Issy-les-Moulineaux (FR)
(72) Inventor: MANDANAPU, Subash, San Bruno, CA 94066 (US); MOURYA, Manoj, Fremont, CA 94538 (US)
(74) Representative: Regimbeau
(86) International application number: PCT/IB2015/001181
(87) International publication number: WO 2015/198136

(56) References cited:
- US-A1- 2008 181 379
- US-A1- 2009 080 416
- US-A1- 2010 319 063
- US-B1- 7 921 299

## Description

### FIELD OF THE PRESENT SYSTEM:

The present invention generally relates to communications using electronic devices in telecommunication networks, and more specifically to enhanced communications services.

### BACKGROUND OF THE PRESENT SYSTEM:

Phones such as mobile and landline have become important devices in our daily life. A phone or device is generally a subscriber to a telecommunication network in order to enjoy communication services, such as voice, data, ... for mobile phones, or handover between landline and mobile phones.

A subscriber to a telecommunication network is generally identified through its identifier in the network, like his phone number. When presented during a call placed from a calling device, the identifier is referred as the Caller Identifier or Caller ID in short.

For a mobile, his MSISDN (Mobile Station International Subscriber Directory Number) is actually the mobile device phone number. A mobile device generally comes with a Subscriber Identity Module (SIM), unique to one subscriber and carries information to identify that subscriber in his home network, i.e. the network he is a subscriber of. This information includes the International mobile Subscriber Identity (IMSI) and other authentication data. The mobile IMSI is a unique number associated with all GSM (Global System for Mobile communications) and Universal Mobile Telecommunications System (UMTS) network mobile phone users. The SIM and its IMSI may be associated to several MSISDN.

Landline devices, such as home devices or work devices, are also associated to a phone number to be presented as the Caller ID.

The Caller ID of the calling device is generally used by the called device to look up in a directory or contact list to present an enhanced Caller ID comprises a name, and even a picture or live data, when the Caller ID is associated to a live stream for the contact. The Caller ID can nonetheless be deceiving. Indeed, Telco related consumer fraud is growing across different markets, where the fraudsters/impostors pretend to be a business or a service provider, like a financial institution, and call customers using a fake Caller ID to gather personal information. Today, imposters can easily modify their Caller ID to known institutions such as Financial or Health Care provider to deceive the customer.

Today there is no solution for customers to verify if the call is coming from a known or certified service provider. Most of the customers rely on the caller ID to filter or screen a call. Google devices offer a Caller ID search by searching the web based on the Caller ID from an incoming call, and displaying the name of the found business with the Caller ID on the called device. As the caller ID may already be compromised even prior to the Google search, this service will contribute to deceiving the user as displaying wrong information and lead the customer to believe that this call is from trusted party.

Another solution is proposed in document US20110085650A 1 wherein the Caller ID is used to check with a certification server where the call originates from. Nevertheless, this is still a Caller ID based approach that can be worked around by mimicking a false Caller ID. U.S. patent application publication No. 2010/0319063 A1 describes a method for controlling access to secured application features using client trust level. Document US2009080416 A1 discloses a method of utilizing a token for registration and call setup phases in order to establish a call between a caller and callee.

Today there is still a need for a simple solution that allows an efficient Caller ID screening and certification for a user when receiving a call. There is a further need for a system service providers can use easily to present a certified Caller ID to a callee/user.

### SUMMARY OF THE PRESENT SYSTEM AND METHOD:

It is an object of the present subject disclosure to propose a system, device, processor and method to overcome disadvantages and/or make improvements in the prior art.

To that extent, the present subject disclosure proposes a method to verify a calling party when placing a call to a recipient party as set forth in the appended claims.

Thanks to the present system, a method is provided to allow calls from pre-registered calling parties. Only parties with a registration token may be allowed to place certified calls to recipient parties. Thus the callee can enjoy a sense of security knowing that the entity the incoming call originates from is a verified entity.

The present subject disclosure also proposes a call verification server to verify a calling party when placing a call to a recipient party as set forth in the appended claims.

Also proposed in the present subject disclosure is a telecommunication system as set forth in the appended claims.

According to another aspect of the present subject disclosure, an application embodied on a computer readable medium is proposed as set forth in the appended claims.

### BRIEF DESCRIPTION OF THE DRAWINGS:

The present system, call management node and method are explained in further detail, and by way of example, with reference to the accompanying drawings wherein:
FIG. 1 A shows an first illustrative embodiment of the present system,
FIG. 1 B shows a second illustrative embodiment of the present system,
FIG. 2A is a flowchart illustrating an embodiment of the present method, and;
FIG. 2B shows further acts of the flow chart of FIG. 2A.

### DETAILED DESCRIPTION OF THE PRESENT SYSTEM AND METHOD:

The following are descriptions of exemplary embodiments that when taken in conjunction with the drawings will demonstrate the above noted features and advantages, and introduce further ones.

In the following description, for purposes of explanation rather than limitation, specific details are set forth such as architecture, interfaces, techniques, etc., for illustration. However, it will be apparent to those of ordinary skill in the art that other embodiments that depart from these details would still be understood to be within the scope of the appended claims.

Moreover, for the purpose of clarity, detailed descriptions of well-known devices, systems, and methods are omitted so as not to obscure the description of the present system. Furthermore, routers, servers, nodes, base stations, gateways or other entities in a telecommunication network are not detailed as their implementation is beyond the scope of the present system and method.

This illustration is in no way a limitation of the scope of the present method and system as communication devices such as fixed devices or communication devices behind a PBX (Private Branch exchange), and more generally any device registered for communication services in an operator network can benefit from the present teachings.

Furthermore, what will be referred to as a "call" in this description may be a standard voice call or any other communication session established between a first party, referred to as the calling party or caller, and a second party, referred to as the called party or callee. One will understand of course that the call is placed more precisely between the users telecommunication devices, i.e. the calling device and the called or recipient device, for instance a video call between the first and second parties, or data exchange between devices. Each side of the call in the telecommunication network will be referred to a branch or a leg of the call. The call may also be referred to as a communication path between the two devices. When a communication path is set up between both calling and called devices, different entities of the present telecommunication system are involved and this path generally involves a two level exchange mechanism:
- a signaling level corresponding to the signaling (or set up) messages exchanges through the network entities between the two devices,
- a media level for handling data, voice (when Voice over IP) ...

Furthermore, the calling and called devices will also be referred to as end points as they represent both ends to the communication path.

In addition, it should be expressly understood that the drawings are included for illustrative purposes and do not represent the scope of the present system.

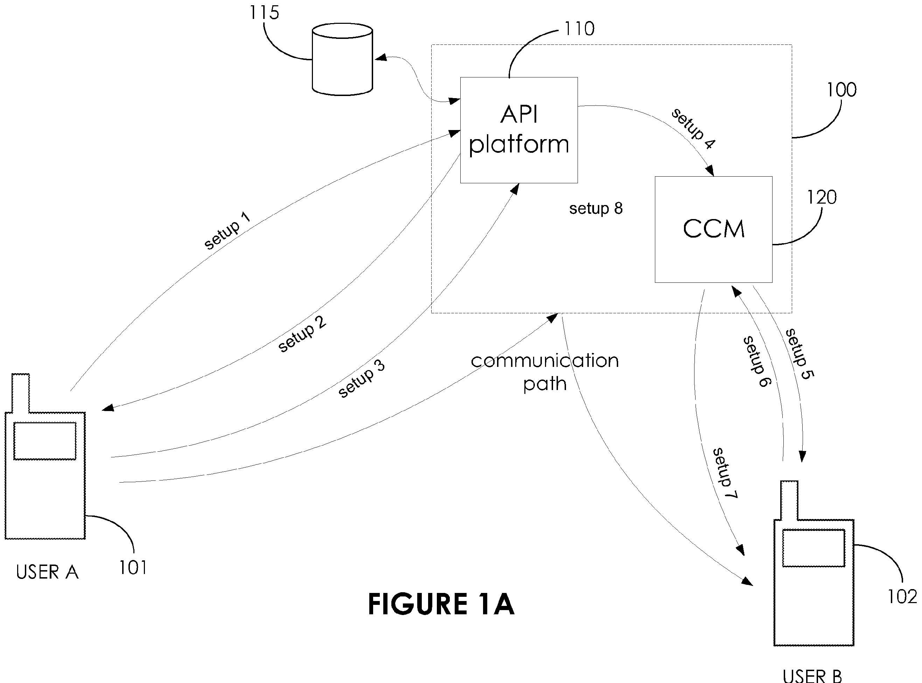

FIG. 1A shows a first exemplary embodiment of the present system. A first device 101 for User A is associated to a first Caller ID Caller_ID_A. In existing system, when placing or making a call to a second device 102, associated to the User B, Caller_ID_A will be presented to that second device 102. As mentioned before, imposters may use a fake Caller_ID_A to present to the second device 102.

In this first exemplary embodiment of the present system, the first device 101 may comprise a client or application CLIENT_1 (not shown in the present FIG. 1A) to send a request to a call verification server 100 (CVS) for registration to a call - or calling party - verification service. To offer such a service, through the server 100, the present CVS 100 may comprise:
- an API (Application Program Interface) platform 110 enabling the agent of first electronic device 101 to interact with the CVS 100 and the call verification service,
- a CCM (Call Control Module) 120 to handle the communication path between the two devices 101 and 102. Such a module or node may be in charge of handling call setup messages for the present call verification service. This module is a known module in today telecommunication networks and may be characterized through 2 main functions:
   a) a Call Control function that corresponds to the central function of a telephone switch. Call control offers different features such as decoding addressing information and routing telephone calls from one end point to another. It also creates added features such as "Call Waiting", "Call Forward on Busy", and "Do Not Disturb". This function handles the signaling level mentioned before in regards to the communication between the two devices,
   b) a Media function to handle the entire media part of a communication between two end points. This function corresponds to the over level, i.e. the media level mentioned before.

When receiving at the API platform 110 a request from the calling party 110 for registration to the calling party verification service, CVS 100 may store in database 115 an entry for the calling party, and allocate a first registration token that is associated at the API platform with an entry for the calling party. The storage of the registration token allows the subsequent identification of the calling party, whenever calling an API using that first token.

As a response to the request for registration, the first token is sent to the calling party and stored thereon, when received, by the agent CLIENT_1.

Once registered, the calling party may proceed with a call using the call verification service of the present system. Rather than calling directly the called party 102, the calling party will make a second request, using the client CLIENT_1, to the API platform 110, to set up a call. The second request will comprise:
- data for the called party recipient to the call. Such data may be for instance its phone number,
- the first registration token.

From the CVS side, the server 100 will receive at the API platform 110 a request from the calling party to set up a call, the request comprising data for a recipient party for the call, and a second token.

The CVS will look up in database 115 the registration token associated to the calling party and compare it to the received token in the call set up request. Provided there is a match between the received second token and the first registration token stored for the calling party, the CVS 100 will proceed with setting up, i.e. connecting, a call between the calling party and the recipient/called party using the CCM 120.

Other functionalities, such as an enhanced caller ID presentation may also be enabled through the present system as explained here after.

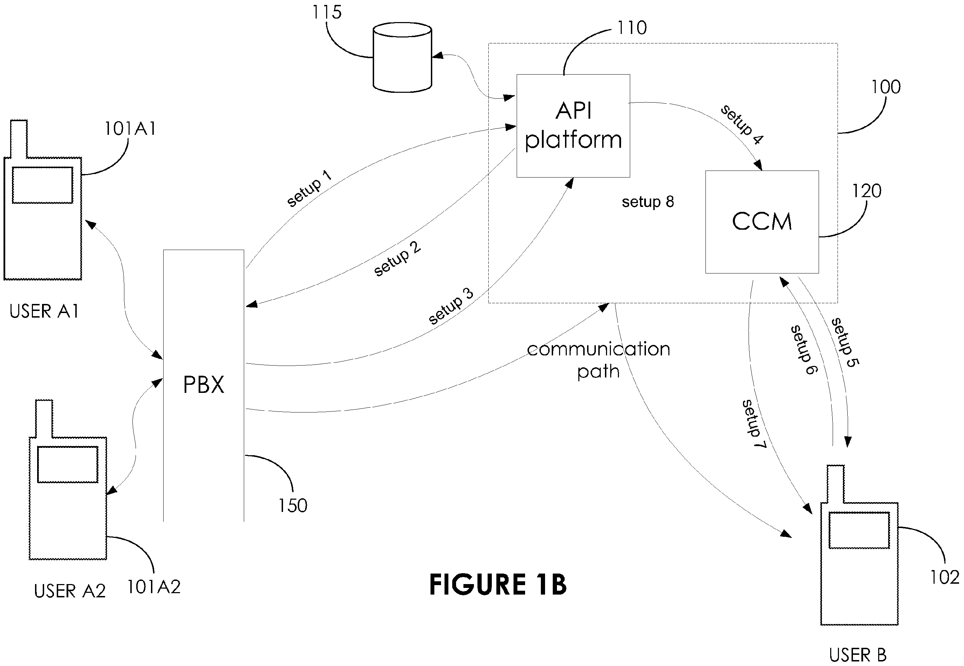

FIG. 1B is an alternative embodiment of the present system. The CVS 100, its database 115, its CCM 120 and the API platform 110 are similar to the corresponding references in FIG. 1A. A plurality of calling devices 101Ai, illustrated as devices101A1, associated to user A1, and 101A2, associated to user A2, are hosted behind a PBX (Private Branch exchange) 150 of e.g. a company. Each calling device 101Ai may be associated to a caller ID Caller_ID_Ai with the PBX. In the present system, the request for registration to the call verification service may be handled at the PBX level, the first registration token being associated to the company, i.e. an identifier for the PBX. When placing a call from one of the calling devices 101Ai, the PBX identifier may be added to the call set up messages so that the API platform identifies the PBX 150 and retrieve the right registration token associated in database 115 to the company.

Such an embodiment using a PBX can enjoy the same services as the ones for an individual user of FIG. 1A and described here after. The PBX may be configured to call the different APIs offered by the API platform 110 from the CVS 100.

The PBX illustration is a mere example of a different embodiment of the present call verification service as it may be replaced by a carrier network bridging another network where the CVS 100 is hosted. One may note that illustrating the CVS 100 as comprising two parts is in no way limiting as these two parts could be hosted by the same node or server, or being operatively linked to each other. The two part presentation helps to illustrate the different tasks and functions performed by the CVS 100 in the present system.

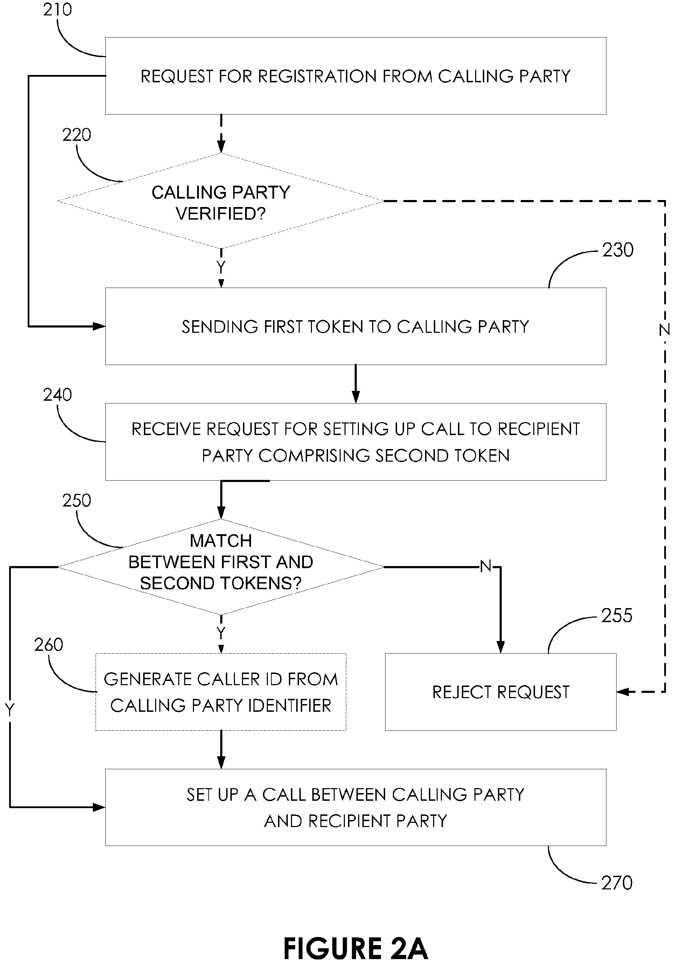

FIG. 2A is a flow chart illustrating an exemplary embodiment of the present method, wherein the first device 101 of FIG. 1A places a call to the second device 102 using the present call verification service. The present acts are carried out by the CVS 100, more precisely a processor running an application comprising instructions to execute the present computer implemented method.

In a preliminary act not shown in FIG. 2A, the calling device 101 may download an application like CLIENT_1 for enabling the present call verification service. The application may be available through a platform operatively connected to the CVS 100 the user A may register with using for instance a login and password. Alternatively, the user may obtain the application CLIENT_1 from an application store the calling device may operate with.

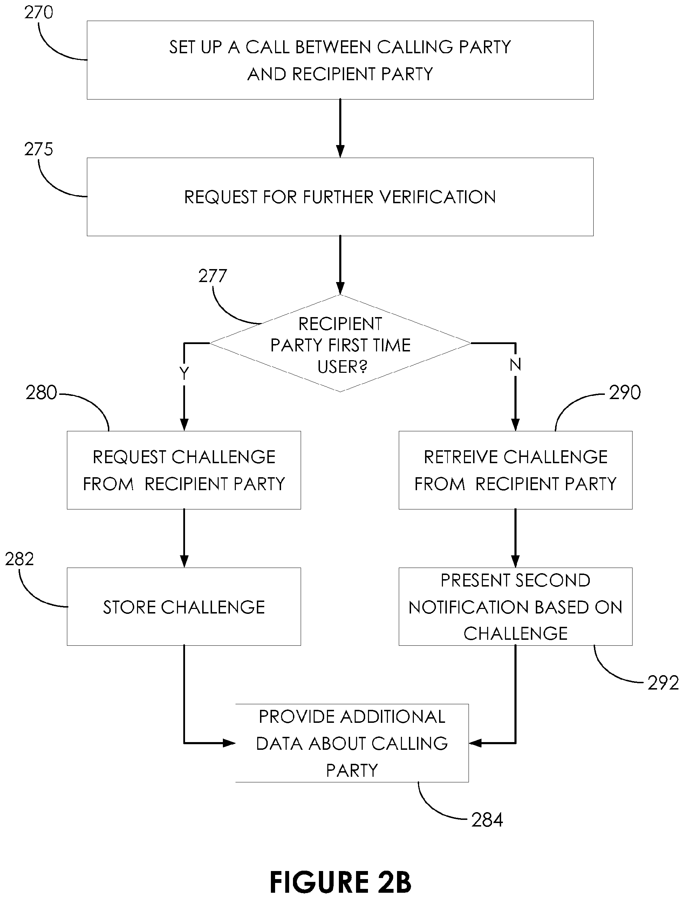

When available through a PBX of a company, the service may be enabled at the PBX level through a software or application running on the company's network. In the hereafter description, reference will be made to a calling device 101, like a mobile phone. More generally, the present teachings may be applied by the man skilled in the art to electronic devices behind a PBX or a carrier network like in the illustration of FIG. 2B or a landline device connected to a set top box or the PSTN (Public Switch Network).

In an act 210, corresponding to the registration of the calling device 101 to the call verification service, the CVS 100 will receive at the API platform 110 a request from the calling party 101 for registration to the calling party - or call - verification service of the present system. This corresponds to the setup message "setup 1" in FIGs. 1A and 1B.

In an additional embodiment of the present system, the request for registration further comprises a first identifier for the calling party. This may be for instance the Caller ID Caller_ID_A for the calling device 101 or another identifier, like a User A login for the call verification service of the present system. For the PBX embodiment, it may be a login or registration ID for the company.

The identifier may be stored at the CVS 100, e.g. in database 1151 and used as seen here after either to increase security of the service, generate the registration token or an enhanced Caller ID.

In a further and optional act 220 (shown in dotted lines in FIG. 2A), the CVS 100 may verify whether calling party 101 is an imposter or not. Different techniques, like the certification proposed in document US20110085650A1, may be used at this stage and are beyond the scope of the present system. For instance the registration may include a premium registration wherein the calling party has to go through a detailed registration, including e.g. payment, so as to further verify the calling party.

Provided the authentication is granted (answer Yes to act 220), the call verification service may carry on to act 230. Provided the authentication is rejected (answer No to act 220), the service will proceed with act 255, i.e. reject the request for registration.

Alternatively, the request for registration in act 210 may be followed directly by the act 230. In a further act 230 of the present method, the CVS 100 will send to the calling party 101, as a response to the request for registration, a first token associated at the API platform 110 to the calling party. This corresponds to the setup message "setup 2" in FIGs. 1A and 1B. The association may be carried out by storing at the API platform the calling party first identifier in relation to the first token, for instance in database 115.

Different techniques may be used to generate the first token, it may be chosen randomly at the CVS level. Alternatively, in an additional embodiment of the present system, the act 230 may further comprise an act (not shown in FIG. 2A) wherein the CVS 100 generates the registration token based on the first identifier. A hashing technique may be used for instance so as to make sure the token is unique to the calling party.

More generally, in the present system, the CVS 100 may be operated by a telecommunication operator, or TelCo, which acts as a call verification entity. A TelCo may uses latest available technology to verify the calling party (e.g. using private public keys, shared keys, unique keys, one-time use keys, etc..) to generate the registration token. These security parameters may be preconfigured based on the relationship or business model between Telco and businesses.

In a further act (not shown in FIG. 2A), the calling party will store the registration token for further use when calling an API from the API platform 110 of CVS 100. Thanks to the present call verification service, the calling party may enable its callee to verify the calling party origin. To do so, whenever placing a call to a called or recipient party 102, the calling party will request to set up a call using a call request API from the API platform 110. This corresponds to the setup message "setup 3" in FIGs. 1A and 1B. The request may comprise data for the calling party, and the first token to be identified by the CVS 100. Optionally the request to set up a call may further comprise the calling party identifier as stored at the API platform 150.

Consequently, in a further act 240, the CVS will receive a request for setting up a call to the recipient party, the request comprising a recipient or called party for the call, and a second token. This corresponds to the first leg of the call between the calling and the called parties. The CVS 100 will then proceed with verifying if the received second token corresponds to a registration token as stored at the API platform, i.e. if the calling party registered with the CVS 100 prior to requesting a call. The match may comprise searching through allocated registration tokens the one matching the received second token. Alternatively, when the identifier for the calling party is provided in the call set up request, the CVS 100 will retrieve the registration token stored in database 115 at the entry corresponding to the calling party identifier. More complex matching or verification scenarios may be envisaged to increase security of the registration and verification process.

Provided there is no match between the received token from the call setup request and the token stored for the calling party (answer No to act 250), the request will be rejected in further act 255. Provided there is a match (answer Yes to act 250), the CVS 100 will proceed with setting up a call between the calling party 101 and the called party 102 in a further act 270 using the CCM 120. This corresponds to the setup message "setup 4" in FIGs. 1A and 1B and the second leg of the call. The matching tokens ensure that the calling party was first registered with the CVS 100, server that will subsequently set the call to the recipient party 102 upon recognition of a previously allocated registration token.

Thus, a verified call is established between the calling party and the called party, by joining e.g. the two legs of the call.

The call set up of act 270 may further comprise the presentation of a first notification to the called device. This corresponds to the setup message "setup 5" in FIGs. 1A and 1B. The first notification simply may be the Caller ID of the calling device, or an enhanced Caller ID to show the callee that the incoming call is certified. In an additional embodiment of the present system, the first notification presented to the called device comprises an indication that the call is verified.

To do so, in a further optional act 260 in dotted lines in FIG. 2A, the CVS 100 will generate a Caller ID for the incoming call using the calling party identifier. The calling party identifier may come from the identifier stored with the calling party registration token or a second identifier comprised in the call set up request received in act 240. The generated Caller ID may be referred to as an enhanced Caller ID and may comprise one or more of:
- an indication of the calling party identifier,
- an indication that the call is verified, e.g. "Orange certified call" added in the notification to the call. The first notification or enhanced Caller ID may be pushed through the CCM 120 so as to be presented to the callee. Such an enhanced Caller ID may actually be based on the result of the match between the registration token, and the token received in the call set up request.

The first notification may be presented to the user using different paths, for instance through a short message, or through a voice notification. Different notifications may be used to present the indication that the incoming call is verified.

The call set up of act 270 may not be only conditioned to a match between the allocated registration token and the received token. Indeed, in a further embodiment of the present system, the call set up may be further conditioned to a match between the stored identifier for the calling party (as known from the registration of act 210) and a second identifier in the call set up request received at the API platform 150.

The call set up may be conditioned to further verification as follows. The call set up may indeed offer the possibility to the callee to place a request for further verification. The first notification displayed on the called device, with the indication that the call is verified, may indeed comprise an active element the callee may select to send a request for further verifications. Alternatively, when the notification is received e.g. through a text, the user B may reply to the text to request further verification.

In a further act 275, the CVS 100 will receive in reply to the first notification, a request for further verification from the recipient party 102. This corresponds to the setup message "setup 6" in FIGs. 1A and 1B. In a subsequent act, data related to the recipient party will be retrieved at the API platform.

To do so, in an act 277 shown in FIG. 2B, the CVS will check if the recipient party is a first time user to the call verification service. Provided so (answer Yes to act 277), the CVS 100 will request a challenge from the recipient party in a further act 280. The challenge will correspond to a user defined test uniquely known to the user, thereby showing that the call is actually a verified call under the present call verification service. The challenge may be for instance a voice prompt that the user B of the recipient device may record for subsequent replay with each incoming verified call. Such a challenge will be stored in a further act 282 in relation to the recipient party in database 115, using for instance its phone number at the entry in the database. An imposter trying to copy the present verification service will not be able to access the user based challenge. The service may carry on with presenting further information about the calling party in an act 282, such as full name, website info, or any other data collected during registration of acts 210-230 in FIG. 2A.

Once the recipient party is no longer a first time user (answer No to act 277), the CVS 100 will retrieve in database 115 the data stored in relation to the recipient party entry in a further act 290, e.g. the challenge provided in act 280. The challenge, such as a voice prompt with the User B own voice, will be presented to the recipient device. This may alternatively be further questions, or recognition of objects initially provided by the user B. In a further act 292, the CVS will present a second notification based on the retrieved data, here the stored challenge. This corresponds to the setup message "setup 7" in FIGs. 1A and 1B. Provided the challenge is correct validated by the user B (voice prompt acknowledged, right answer to the question ...), the present call verification service will proceed to act 284 with providing additional information about the calling party.

Once the call is verified and accepted by the recipient party 102, a call, i.e. a communication path, is established between the calling party and the recipient party.

Thanks to the present system, a user can enjoy a call verification service allowing only certified/verified calls from calling parties such as businesses. Using a token provided at registration of a calling party, the CVS 100 will only process calls from registered parties.

The present system also bring enhanced trust to the callee as to whom is behind the incoming call.

Finally, the above-discussion is intended to be merely illustrative of the present system and should not be construed as limiting the appended claims to any particular embodiment or group of embodiments. Thus, while the present system has been described with reference to exemplary embodiments, it should also be appreciated that numerous modifications and alternative embodiments may be devised by those having ordinary skill in the art without departing from the broader and intended scope of the present system as set forth in the claims that follow.

The section headings included herein are intended to facilitate a review but are not intended to limit the scope of the present system. Accordingly, the specifications and drawings are to be regarded in an illustrative manner and are not intended to limit the scope of the appended claims.

## Claims

1. A method to verify a calling party (101) when placing a call to a recipient party (102), the method comprising, at a call verification server (100):
- receiving at an Application Program Interface (API) platform (110) of the call verification server (100), a request from a calling party for registration for the calling party verification,
- sending to the calling party, as a response to the request for registration, a first token associated at the API platform to the calling party,
- receiving at the API platform a request to set up a call, the request comprising a recipient party for the call, and a second token,
- setting up the call to the recipient party, when there is a match between the first and second token,
wherein the request to set up a call is received from the calling party and the request for registration does not comprise the recipient party for the call.

2. The method of claim 1, wherein the request for registration further comprises a first identifier for the calling party, the act of sending a first token further comprising:
- storing at the API platform the first identifier in relation to the first token.

3. The method of claim 2, the act of sending a first token comprising a preliminary act of:
- generating the first token based at least on the first identifier.

4. The method of claim 2, wherein the request for setting up a call further comprises the first identifier for the calling party, the act of setting up a call further comprising:
- generating a Caller ID based on the first identifier,
- setting up a call to the recipient party using the generated Caller ID as the Caller ID to the call.

5. The method of claim 4, the act of generating a Caller ID further comprising:
- generating a Caller ID based on the result of the match between the first and second token.

6. The method of claim 2, wherein the request to set up a call further 5 comprises a second identifier for the calling party, the act of setting up a call further comprising:
- setting up a call to the recipient party, when there is a match between the first and second token and a further match between the first and second identifiers.

7. The method of claim 1, wherein the request to set up a call further comprises a second identifier for the calling party, the method further comprising:
- generating a Caller ID based on the second identifier,
- setting up a call to the recipient party using the generated Caller ID as the Caller ID to the call.

8. The method of claim 1, the act of setting up a call further comprising:
- presenting a first notification to the recipient party, the notification comprising an indication that the call is verified.

9. The method of claim 8, further comprising:
- receiving, in reply to the first notification, a request for further verification from the recipient party,
- retrieving at the API platform data related to the recipient party,
- presenting a second notification to the recipient party, the second notification being based on the retrieved data.

10. The method of claim 1 wherein the first token is based only on the calling party.

11. A call verification server (100) to verify a calling party (101) when placing a call to a recipient party (102), the call verification server comprising an Application Program Interface (API) platform (110) and being configured to:
- receive at the API platform a request from a calling party for registration for the calling party verification,
- send to the calling party, as a response to the request for registration, a first token associated at the API platform to the calling party,
- receive at the API platform a request to set up a call, the request comprising a recipient party for the call, and a second token,
- set up the call to the recipient party, when there is a match between the first and second token,
wherein the request to set up a call is received from the calling party and the request for registration does not comprise the recipient party for the call.

12. The call verification server of claim 11 wherein the request for registration does not comprise the recipient party for the call or the first token is based only on the calling party.

13. A telecommunication system comprising:
- a calling party (101)
- a recipient party (102)
- a call verification server (100) to verify the calling party when placing a call to the recipient party, the call verification server comprising an Application Program Interface (API) platform (110) and being configured to:
- receive at the API platform a request from a calling party for registration for the calling party verification,
- send to the calling party, as a response to the request for registration, a first token associated at the API platform to the calling party,
- receive at the API platform a request to set up a call, the request comprising a recipient party for the call, and a second token,
- set up the call to the recipient party, when there is a match between the first and second token,
wherein the request to set up a call is received from the calling party and the request for registration does not comprise the recipient party for the call.

14. The telecommunication system of claim 13 wherein the request for registration does not comprise the recipient party for the call or the first token is based only on the calling party.

15. An application embodied on a non-transitory computer readable medium and configured to verify, when executed by a call verification server (100), a calling party (101) when placing a call to a recipient party (102), the application comprising instructions for:
- receiving at an Application Program Interface (API) platform (110) of the call verification server (100) a request from" the calling party for registration for the calling party verification,
- sending to the calling party, as a response to the request for registration, a first token associated at the API platform to the calling party,
- receiving at the API platform a request to set up a call, the request comprising a recipient party for the call, and a second token,
- setting up the call to the recipient party, when there is a match between the first and second token,
wherein the request to set up a call is received from the calling party and the request for registration does not comprise the recipient party for the call.

16. The application of claim 15 wherein the request for registration does not comprise the recipient party for the call or the first token is based only on the calling party.

## Patentansprüche

1. Verfahren, um eine anrufende Partei (101) zu überprüfen, wenn ein Anruf bei eine Empfängerpartei (102) abgesetzt wird, wobei das Verfahren bei einem Anrufüberprüfungs-Server (100) Folgendes umfasst:
- Empfangen bei einer Anwendungsprogrammschnittstellenplattform (API-Plattform) (110) des Anrufüberprüfungs-Servers (100) einer Anforderung von einer anrufenden Partei einer Registrierung für die Überprüfung der anrufenden Partei,
- Senden an die anrufende Partei als eine Antwort auf die Anforderung einer Registrierung eines ersten Zeichens, das bei der API-Plattform der anrufenden Partei zugeordnet ist,
- Empfangen bei der API-Plattform einer Anforderung, einen Anruf einzurichten, wobei die Anforderung eine Empfängerpartei für den Anruf und ein zweites Zeichen umfasst,
- Einrichten des Anrufs an die Empfängerpartei, wenn es eine Übereinstimmung zwischen dem ersten Zeichen und dem zweiten Zeichen gibt,
wobei die Anforderung, einen Anruf einzurichten, von der anrufenden Partei empfangen wird und die Anforderung einer Registrierung nicht die Empfängerpartei für den Anruf umfasst.

2. Verfahren nach Anspruch 1, wobei die Anforderung einer Registrierung ferner eine erste Kennung für die anrufende Partei umfasst, wobei die Handlung des Sendens eines ersten Zeichens ferner Folgendes umfasst:
- Speichern bei der API-Plattform der ersten Kennung in Beziehung zu dem ersten Zeichen.

3. Verfahren nach Anspruch 2, wobei die Handlung des Sendens eines ersten Zeichens eine vorläufige Handlung umfasst von:
- Erzeugen des ersten Zeichens zumindest anhand der ersten Kennung.

4. Verfahren nach Anspruch 2, wobei die Anforderung, einen Anruf einzurichten, ferner die erste Kennung für die anrufende Partei umfasst, wobei die Handlung des Einrichtens eines Anrufs ferner Folgendes umfasst:
- Erzeugen einer Anrufer-ID anhand der ersten Kennung,
- Einrichten eines Anrufs an die Empfängerpartei unter Verwendung der erzeugten Anrufer-ID als die Anrufer-ID zu dem Anruf.

5. Verfahren nach Anspruch 4, wobei die Handlung des Erzeugens einer Anrufer-ID ferner Folgendes umfasst:
- Erzeugen einer Anrufer-ID anhand des Ergebnisses der Übereinstimmung zwischen dem ersten Zeichen und dem zweiten Zeichen.

6. Verfahren nach Anspruch 2, wobei die Anforderung, einen Anruf einzurichten, ferner eine zweite Kennung für die anrufende Partei umfasst, wobei die Handlung, einen Anruf einzurichten, ferner Folgendes umfasst:
- Einrichten eines Anrufs an die Empfängerpartei, wenn es eine Übereinstimmung zwischen dem ersten Zeichen und dem zweiten Zeichen und eine weitere Übereinstimmung zwischen der ersten und der zweiten Kennung gibt.

7. Verfahren nach Anspruch 1, wobei die Anforderung, einen Anruf einzurichten, ferner eine zweite Kennung für die anrufende Partei umfasst, wobei das Verfahren ferner Folgendes umfasst:
- Erzeugen einer Anrufer-ID anhand der zweiten Kennung,
- Einrichten eines Anrufs an die Empfängerpartei unter Verwendung der erzeugten Anrufer-ID als die Anrufer-ID zu dem Anruf.

8. Verfahren nach Anspruch 1, wobei die Handlung des Einrichtens eines Anrufs ferner Folgendes umfasst:
- Darstellen einer ersten Benachrichtigung für die Empfängerpartei, wobei die Benachrichtigung eine Angabe umfasst, dass der Anruf überprüft wird.

9. Verfahren nach Anspruch 8, das ferner Folgendes umfasst:
- Empfangen in Erwiderung auf die erste Benachrichtigung einer Anforderung einer weiteren Überprüfung von der Empfängerpartei,
- Erfassen bei der API-Plattform von Daten bezüglich der Empfängerpartei,
- Darstellen einer zweiten Benachrichtigung für die Empfängerpartei, wobei die zweite Benachrichtigung auf den erfassten Daten beruht.

10. Verfahren nach Anspruch 1, wobei das erste Zeichen nur auf der anrufenden Partei beruht.

11. Anrufüberprüfungs-Server (100), um eine anrufende Partei (101) zu überprüfen, wenn ein Anruf an eine Empfängerpartei (102) abgesetzt wird, wobei der Anrufüberprüfungs-Server eine Anwendungsprogrammschnittstellenplattform (API-Plattform) (110) umfasst und konfiguriert ist zum:
- Empfangen bei der API-Plattform einer Anforderung von einer anrufenden Partei einer Registrierung für die Überprüfung der anrufenden Partei,
- Senden an die anrufende Partei als eine Antwort auf die Anforderung einer Registrierung eines ersten Zeichens, das bei der API-Plattform der anrufenden Partei zugeordnet ist,
- Empfangen bei der API-Plattform einer Anforderung, einen Anruf einzurichten, wobei die Anforderung eine Empfängerpartei für den Anruf und ein zweites Zeichen umfasst,
- Einrichten des Anrufs an die Empfängerpartei, wenn es eine Übereinstimmung zwischen dem ersten und dem zweiten Zeichen gibt,
wobei die Anforderung, einen Anruf einzurichten, von der anrufenden Partei empfangen wird und die Anforderung einer Registrierung nicht die Empfängerpartei für den Anruf umfasst.

12. Anrufüberprüfungs-Server nach Anspruch 11, wobei die Anforderung einer Registrierung nicht die Empfängerpartei für den Anruf umfasst oder das erste Zeichen nur auf der anrufenden Partei beruht.

13. Telekommunikationssystem, das Folgendes umfasst:
- eine anrufende Partei (101)
- eine Empfängerpartei (102)
- einen Anrufüberprüfungs-Server (100), um die anrufende Partei zu überprüfen, wenn ein Anruf an die Empfängerpartei abgesetzt wird, wobei der Anrufüberprüfungs-Server eine Anwendungsprogrammschnittstellenplattform (API-Plattform) (110) umfasst und konfiguriert ist zum:
- Empfangen bei der API-Plattform einer Anforderung von einer anrufenden Partei einer Registrierung für die Überprüfung der anrufenden Partei,
- Senden an die anrufende Partei als eine Antwort auf die Anforderung einer Registrierung eines ersten Zeichens, das bei der API-Plattform der anrufenden Partei zugeordnet ist,
- Empfangen bei der API-Plattform einer Anforderung, einen Anruf einzurichten, wobei die Anforderung eine Empfängerpartei für den Anruf und ein zweites Zeichen umfasst,
- Einrichten des Anrufs an die Empfängerpartei, wenn es eine Übereinstimmung zwischen dem ersten und dem zweiten Zeichen gibt,
wobei die Anforderung, einen Anruf einzurichten, von der anrufenden Partei empfangen wird und die Anforderung einer Registrierung nicht die Empfängerpartei für den Anruf umfasst.

14. Telekommunikationssystem nach Anspruch 13, wobei die Anforderung einer Registrierung nicht die Empfängerpartei für den Anruf umfasst oder das erste Zeichen nur auf der anrufenden Partei beruht.

15. Anwendung, die auf einem nicht transitorischen computerlesbaren Medium enthalten ist und konfiguriert ist, dann, wenn sie durch einen Anrufüberprüfungs-Server (100) ausgeführt wird, eine anrufende Partei (101) zu überprüfen, wenn ein Anruf an eine Empfängerpartei (102) abgesetzt wird, wobei die Anwendung Anweisungen umfasst zum:
- Empfangen bei einer Anwendungsprogrammschnittstellenplattform (API-Plattform) (110) des Anrufüberprüfungs-Servers (100) einer Anforderung von der anrufenden Partei einer Registrierung für die Überprüfung der anrufenden Partei,
- Senden an die anrufende Partei als eine Antwort auf die Anforderung einer Registrierung eines ersten Zeichens, das bei der API-Plattform der anrufenden Partei zugeordnet ist,
- Empfangen bei der API-Plattform einer Anforderung, einen Anruf einzurichten, wobei die Anforderung eine Empfängerpartei für den Anruf und ein zweites Zeichen umfasst,
- Einrichten des Anrufs an die Empfängerpartei, wenn es eine Übereinstimmung zwischen dem ersten und dem zweiten Zeichen gibt,
wobei die Anforderung, einen Anruf einzurichten, von der anrufenden Partei empfangen wird und die Anforderung einer Registrierung nicht die Empfängerpartei für den Anruf umfasst.

16. Anwendung nach Anspruch 15, wobei die Anforderung einer Registrierung nicht die Empfängerpartei für den Anruf umfasst oder das erste Zeichen nur auf der anrufenden Partei beruht.

## Revendications

1. Procédé de vérification d'un appelant (101) lorsqu'il effectue un appel vers un destinataire (102), le procédé comprenant, au niveau d'un serveur de vérification d'appels (100) :
- la réception, au niveau d'une plate-forme d'interface de programme d'application (API) (110) du serveur de vérification d'appel (100), d'une demande d'enregistrement provenant d'un appelant pour la vérification de l'appelant,
- l'envoi à l'appelant, en tant que réponse à la demande d'enregistrement, d'un premier jeton associé à l'appelant au niveau de la plate-forme API,
- la réception, au niveau de la plate-forme API, d'une demande d'établissement d'un appel, la demande comprenant un destinataire pour l'appel, et un second jeton,
- l'établissement de l'appel vers le destinataire, lorsqu'il y a correspondance entre le premier jeton et le second jeton,
Dans lequel la demande d'établissement d'un appel est reçue de la part de l'appelant et la demande d'enregistrement ne comprend pas le destinataire de l'appel.

2. Procédé selon la revendication 1, dans lequel la demande d'enregistrement comprend en outre un premier identifiant pour l'appelant, l'étape d'envoi d'un premier jeton comprenant en outre :
- le stockage, au niveau de la plate-forme API, du premier identifiant en relation avec le premier jeton.

3. Procédé selon la revendication 2, l'étape d'envoi d'un premier jeton comprenant une étape préliminaire comprenant :
- la génération du premier jeton sur la base d'au moins le premier identifiant.

4. Procédé selon la revendication 2, dans lequel la demande d'établissement d'un appel comprend en outre le premier identifiant de l'appelant, l'étape d'établissement d'un appel comprenant en outre :
- la génération d'un identifiant d'appelant sur la base du premier identifiant,
- l'établissement d'un appel vers le destinataire en utilisant l'identifiant de l'appelant généré comme identifiant d'appelant pour l'appel.

5. Procédé selon la revendication 4, l'acte de génération d'un identifiant d'appelant comprenant en outre :
- la génération d'un identifiant d'appelant basé sur le résultat de la correspondance entre le premier jeton et le second jeton.

6. Procédé selon la revendication 2, dans lequel la demande d'établissement d'un appel comprend en outre un second identifiant pour l'appelant, l'étape d'établissement d'un appel comprenant en outre :
- l'établissement d'un appel vers le destinataire, lorsqu'il y a correspondance entre le premier jeton et le second jeton et une autre correspondance entre le premier identifiant et le second identifiant.

7. Procédé selon la revendication 1, dans lequel la demande d'établissement d'un appel comprend en outre un second identifiant pour l'appelant, le procédé comprenant en outre :
- la génération d'un identifiant d'appelant basée sur le second identifiant,
- l'établissement d'un appel vers le destinataire en utilisant l'identifiant de l'appelant généré comme identifiant d'appelant pour l'appel.

8. Procédé selon la revendication 1, l'étape d'établissement d'un appel comprenant en outre :
- la présentation d'une première notification au destinataire, la notification comprenant une indication que l'appel est vérifié.

9. Procédé selon la revendication 8, comprenant en outre :
- la réception, en réponse à la première notification, d'une demande de vérification supplémentaire de la part du destinataire,
- la récupération, au niveau de la plateforme API, de données relatives au destinataire,
- la présentation d'une seconde notification au destinataire, la seconde notification étant basée sur les données récupérées.

10. Procédé selon la revendication 1, dans lequel le premier jeton est basé uniquement sur l'appelant.

11. Serveur de vérification d'appel (100) pour vérifier un appelant (101) lorsqu'il effectue un appel vers un destinataire (102), le serveur de vérification d'appel comprenant une plate-forme d'interface de programme d'application (API) (110) et étant configuré pour :
- recevoir, au niveau de la plate-forme API, une demande d'enregistrement provenant d'un appelant pour la vérification de l'appelant,
- envoyer à l'appelant, en tant que réponse à la demande d'enregistrement, un premier jeton associé à l'appelant au niveau de la plate-forme API,
- recevoir, au niveau de la plateforme API, une demande d'établissement d'un appel, la demande comprenant un destinataire pour l'appel, et un second jeton,
- établir l'appel vers le destinataire, lorsqu'il y a correspondance entre le premier jeton et le second jeton, où la demande d'établissement d'un appel est reçue de la part de l'appelant et la demande d'enregistrement ne comprend pas le destinataire de l'appel.

12. Serveur de vérification d'appel selon la revendication 11, dans lequel la demande d'enregistrement ne comprend pas le destinataire de l'appel ou le premier jeton est basé uniquement sur l'appelant.

13. Système de télécommunication comprenant :
- un appelant (101)
- un destinataire (102)
- un serveur de vérification d'appel (100) pour vérifier l'appelant lorsqu'il effectue un appel vers le destinataire, le serveur de vérification d'appel comprenant une plate-forme (110) d'interface de programme d'application (API) et étant configuré pour :
- recevoir, au niveau de la plate-forme API, une demande d'enregistrement provenant d'un appelant pour la vérification de l'appelant,
- envoyer à l'appelant, en tant que réponse à la demande d'enregistrement, un premier jeton associé à l'appelant au niveau de la plate-forme API,
- recevoir, au niveau de la plateforme API, une demande d'établissement d'un appel, la demande comprenant un destinataire pour l'appel, et un second jeton,
- établir l'appel vers le destinataire, lorsqu'il y a correspondance entre le premier jeton et le second jeton, où la demande d'établissement d'un appel est reçue de la part de l'appelant et la demande d'enregistrement ne comprend pas le destinataire de l'appel.

14. Système de télécommunication selon la revendication 13, dans lequel la demande d'enregistrement ne comprend pas le destinataire de l'appel ou le premier jeton est basé uniquement sur l'appelant.

15. Application intégrée sur un support non transitoire lisible par ordinateur et configurée pour vérifier, lorsqu'elle est exécutée par un serveur de vérification d'appel (100), un appelant (101) lorsqu'il effectue un appel vers un destinataire (102), l'application comprenant des instructions pour :
- recevoir, au niveau d'une plate-forme d'interface de programme d'application (API) (110) du serveur de vérification d'appel (100), une demande d'enregistrement provenant de l'appelant pour la vérification de l'appelant,
- envoyer à l'appelant, en tant que réponse à la demande d'enregistrement, un premier jeton associé à l'appelant au niveau de la plate-forme API,
- recevoir, au niveau de la plateforme API, une demande d'établissement d'un appel, la demande comprenant un destinataire pour l'appel, et un second jeton,
- établir l'appel vers le destinataire, lorsqu'il y a correspondance entre le premier jeton et le second jeton, Dans laquelle la demande d'établissement d'un appel est reçue de la part de l'appelant et la demande d'enregistrement ne comprend pas le destinataire de l'appel.

16. Application selon la revendication 15, dans laquelle la demande d'enregistrement ne comprend pas le destinataire de l'appel or le premier jeton est basé seulement sur l'appelant.
